# EUROPEAN PATENT SPECIFICATION

(11) **EP 3 835 624 B1**
(45) Date of publication and mention of the grant of the patent: **03.07.2024**
(21) Application number: 19383115.3
(22) Date of filing: 13.12.2019
(51) Int. Cl.: F16H 61/32, F16H 63/30

(54) **GEARBOX ACTUATOR**
GETRIEBESTELLGLIED
ACTIONNEUR DE BOÎTE DE VITESSES

(43) Date of publication of application: 16.06.2021
(73) Proprietor: Fico Triad, S.A., 08028 Barcelona (ES)
(72) Inventor: Gimeno Grané, Santiago, 08232 Viladecavalls (Barcelona) (ES); Ferrer Ribas, Óscar, 08232 Viladecavalls (Barcelona) (ES)
(74) Representative: Hoffmann Eitle

(56) References cited:
- EP-B1- 2 926 036
- US-A- 4 428 248
- US-A1- 2011 303 049
- US-A1- 2018 238 445

## Description

### Field and object of the invention

The present invention refers in general to an actuator for shifting gears in a gearbox of motor vehicles.

An object of the invention is to provide a gearbox actuator that accurately set the gearbox in each gear position.

Another object of the invention is to provide a gearbox actuator that allows free movement of a gearbox shaft at least in one of its rotation direction, to accurately reach stable gear positions, by avoiding that the actuator could restricts displacement of the gearbox shaft.

An additional object of the invention is to achieve the above-mentioned object of accurate positioning of the gearbox shaft, in case of electric power supply failure to the actuator.

### Background of the invention

Vehicle gear shifters, include an actuator operated by a control signal triggered by a gear knob operated by a driver to shift gears.

Typically, actuators of this kind include an electric motor controlled by control electronics, and transmission mechanism that transfers the rotational movement of the motor shaft into a translation movement that is transferred to a gearbox shaft that shift gears by rotating between gear positions.

For defining the stable gear positions, conventionally a contoured surface having alternating valleys and peaks, is used and a roller is moved on that surface while being pressed onto it, such that a gear stable positions are defined at the lowermost area of the valleys. These stable positions are conventionally embodied by a rollerball exerting pressure against the contoured surface, using for that for example a spring, strap or similar element, that press the rollerball against that surface.

The contoured surface is attached to a gearbox shaft, and it is rotated by the actuator to reach a position corresponding to each stable gear position like Neutral, Drive, Reverse, Parking, by a rotational angle that is set in advance.

The accuracy in reaching the stable gear positions, depends on: the tolerances of the actuator components, the accuracy in the actuator positioning, and manufacturing tolerances of the gearbox stable position mechanism.

Additionally, cogging torque of the electric motor and the efficiency of the gears could restrict the position of the gearbox shaft.

Therefore, as a consequence of the tolerances, cogging, efficiency of the system elements and accuracy in the actuator positioning, the gearbox shaft could be not properly positioned at the lowermost area of a valley.

The European patent EP-2926036 B1 relates to a rotary shift actuator for a shift-by-wire transmission comprising a motor having a motor shaft that is rotatable about a motor axis, an output head arranged towards a second end of an output lever and adapted for connection with a shift shaft of a transmission, and a gear train for transferring torque from the motor shaft to the output head.

The U.S. patent publication US 2011/303049 A1 discloses a control system for controlling a dual clutch transmission having a synchronizer assembly includes a motor for selectively providing an output torque in a first and second to both of a first and a second output member. A one-way device is interconnected to the first output member and is operable to transmit the output torque in the first rotational direction.

### Summary of the invention

The present invention is defined in the attached independent claim, and it refers to a gearbox actuator, a reversible gearbox actuator, that typically comprises an electric motor and a shaft member that is rotatable about a gearbox axis (X), and that it is adapted for its mechanical connection with a gearbox shaft of a motor vehicle.

The actuator additionally comprises a transmission mechanism coupled with the electric motor and couplable with the shaft member for transmitting a rotation movement from the electric motor to the shaft member, so as to bring the shaft member to selected angular positions for shifting gears in a gearbox, when the actuator is installed in a vehicle.

The shaft member of the invention when coupled with the gearbox shaft of a motor vehicle, has to be rotated between different gear stable positions like Neutral, Drive, Parking, Reverse, Out of Parking in which the gearbox shaft remains stable, that is, it would not rotate unless a proper force is exerted to it. Transition or unestable positions, are those in which the gearbox shaft is rotating while transiting from one stable position to another, where it cannot remain in a fixed position.

According to the invention, the actuator is configured such that the transmission mechanism can move in a direction in which it is coupled, that is, it is in contact with the shaft member to bring the gear shaft member to a gearbox position. In addition, the actuator is configured such that the transmission mechanism uncouples from the shaft member, at a predefined angular position of the shaft member, to allow free rotation of the shaft member so that it can reach a stable gear position by itself (since it is pushed against a contoured surface by elastic means). The actuator is configured to reverse movement direction to uncouple from the shaft member, to create a separation gap between the shaft member and the transmission mechanism, that allows the shaft member to rotate freely in both directions to reach a stable gearbox position if the shaft member has not reached yet a stable position.

The actuator is configured such that the transmission mechanism uncouples from the shaft member, while the shaft member is in an unstable position, and it is about to reach a stable position. For example, the transmission mechanism is stopped to allow rotation of the shaft member to a stable position. Preferably, the actuator is configured such that the transmission mechanism reverse movement direction to uncouple from the shaft member.

The reversible gearbox actuator further incorporates an electronic controller electrically connected to the electric motor to operate the same, that is to drive the motor and to select rotation direction of the motor shaft. Therefore, the electronic controller is adapted to reverse the rotation direction of the electric motor shaft for a determined angular displacement, in order to reverse movement direction of the transmission mechanism and uncouple the same from the shaft member.

In addition to the conventional operation of the controller to drive the electric motor, the controller is adapted to reverse movement in order to release the shaft member. Release of the shaft member could also be carried out by biasing means that are described later on.

In a preferred embodiment, the controller is provided with a table indicating in which value or range of values could place the different gears, for example: a degree of freedom, in a downfall ramp towards a valley, two degrees of freedom (regression of the driving wheel) between downfall ramp uphill ramp.

Therefore, the invention allows that the gearbox shaft of a motor vehicle reaches accurately gear positions, by avoiding that the actuator restricts movement of the gearbox shaft, for example due to manufacturing tolerances of the components, and it case that the transmission mechanism would permanently be engaged with the shaft member, as it is the case of prior art actuators.

The transmission mechanism comprises a driving wheel mechanism, in which a worm or any other transmission elements may be meshed with the electric motor shaft, and the driving wheel is meshed with the worm or any other transmission element. The driving wheel is couplable (by contacting) with the shaft member such that rotation of the shaft of the electric motor is transmitted to the shaft member for shifting gears.

Furthermore, the shaft member has a first contacting surface radially extending from the gearbox axis (X), and the driving wheel has a protrusion contactable with the first contacting surface of the shaft member for rotating the same.

When the shaft member is about to reach a stable gear position, rotation of the driving wheel may be reversed to disconnect the same from the shaft member, so that the shaft member is uncoupled from the transmission mechanism and it can rotate a predefined number of degrees or freely in both directions.

In a preferred embodiment, the worm is parallel to the electric motor shaft and the transmission mechanism further comprises a toothed wheel axially attached to the worm and meshed with the electric motor axis. This arrangement is advantageous in that it provides a compact (reduced volume) actuator.

Preferably, the actuator comprises biasing means configured for biasing the driving wheel towards both of its rotation directions, that is, clockwise and anticlockwise. The biasing means are provided for moving the driving wheel in the opposite direction of the motor direction movement, to decouple from the shaft member and leave the shaft member free in both directions. In this way, at the gearbox a roller that slides through the contoured surface with a certain pressure can slide towards the bottom of a stable position.

Preferably, the biasing means is a torsion spring mounted on the driving wheel, and having the two ends of the torsion spring attached to the driving wheel, and attached to a fixed part of the actuator, for example a casing of the actuator.

The rotation axis (Y) of the driving wheel is parallel to the gearbox axis (X), and wherein the protrusion of the driving wheel is a first arm, in a way that the arm of the shaft member and the first arm of the driving wheel are coplanar. The rotation axis (Y) of the driving wheel is orthogonal to the plane on which both arms are placed.

Preferably, the driving wheel has a second contacting surface. The arm of the shaft member is placed in between the first and second contacting surfaces of the driving wheel, such that the first and second contacting surfaces can alternatively contact with the shaft arm.

### Brief description of the drawings

Preferred embodiments of the invention are henceforth described with reference to the accompanying drawings, wherein:
Figure 1.- shows in Figure 1A a perspective view from above of an exemplary embodiment of gearbox actuator according to the invention. Figure 1B shows another perspective view from above of the same device but without electric motor.
Figure 2.- shows in Figures 2A,2B, two different perspective view from below of the same device of Figure 1 without electric motor.
Figure 3.- shows a perspective view of the same actuator including an electronic circuit.
Figure 4.- shows a perspective view in figure A of an alternative implementation of the actuator, and a top plan view in figure B
Figure 5.- shows bottom plan views of the actuator at four different sequential positions A-G of the transmission mechanism, when the driving wheel is turning clockwise (figures A-D, as seen in the figure), and when it is turning anti-clockwise (figures E-G, as seen in the figure).

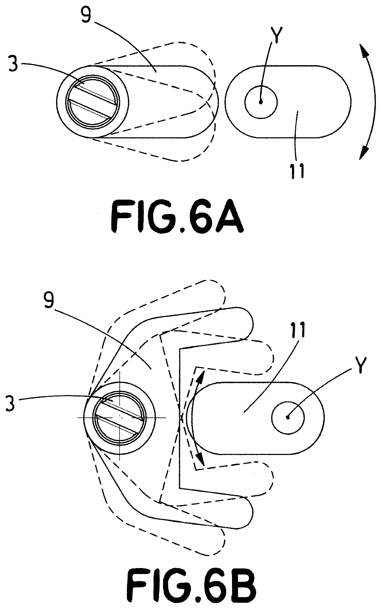

Figure 6.- shows top plan views of two alternative transmission mechanism.

### Preferred embodiment of the invention

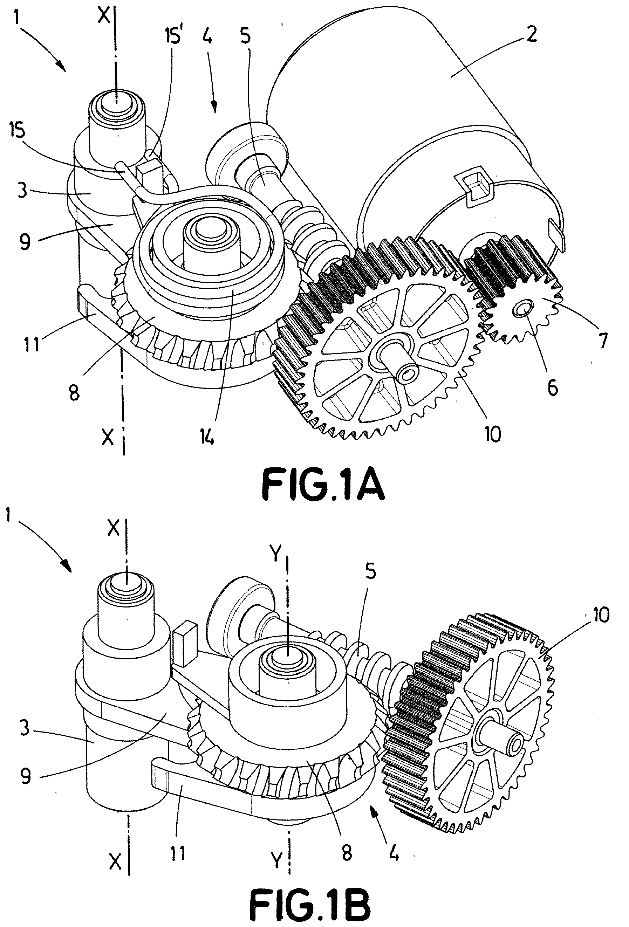

**Figures 1A,1B** show an exemplary implementation of the gearbox actuator (1) of the invention, that comprises an electric motor (2) and a shaft member (3) rotatable about a gearbox axis (X), and adapted for its mechanical connection with a gearbox shaft (not shown) of a motor vehicle.

The actuator (1) includes a transmission mechanism (4) coupled with the electric motor (2) and couplable with the shaft member (3) for transmitting a rotation movement from the electric motor (2) to the shaft member (3), to bring the shaft member (3) to selected angular positions for shifting gears.

The transmission mechanism (4) comprises a worm (5) meshed with the electric motor shaft (6), in particular with a pinion (7) fitted to the motor shaft (6), and a driving wheel (8) meshed with the worm (5) in a known manner. The driving wheel (8) is couplable with the shaft member (3) such that rotation of the shaft (6) of the electric motor (2) is transmitted to the shaft member (3), which in turn would cause gears shift when coupled with a gearbox shaft of a motor vehicle.

As represented in the figures, the worm (5) is parallel to the electric motor shaft (6), and the transmission mechanism (4) further comprises a toothed wheel (10) axially attached to the worm (5) and meshed with the pinion (7) of the electric motor.

For the coupling between the shaft member (3) and the driving wheel (8), the shaft member (3) has at least one arm (9) radially extending from the gearbox axis (X), and the driving wheel (8) has at least one protrusion engageable with the arm (9) for pushing the shaft member (3) and rotating it. The arm (9) has a curved lobe (13) at its free end for contacting and slide on the driving wheel (8) that helps the friction reduction between the two elements.

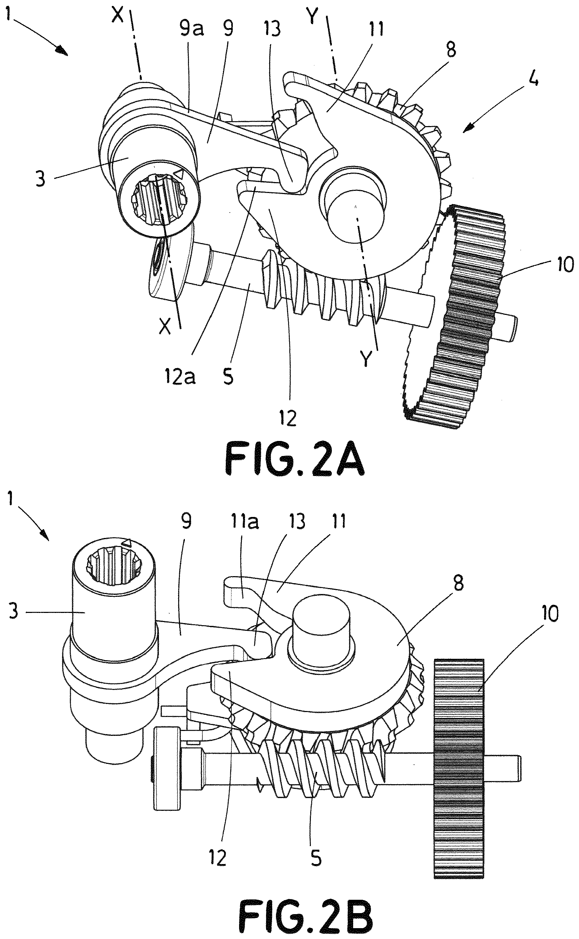

The rotation axis (Y) of the driving wheel (8) is parallel to the gearbox axis (X), which is also the axis of the shaft member (3). The protrusion of the driving wheel (8) comprises a first arm (11) arranged such that the arm (9) of the shaft member (3) and the arm (11) of the driving wheel (8) are coplanar (that is, a surface of the arm (9) and a surface of the arm (11) are movable on the same plane). The rotation axis (Y) of the driving wheel (8) is orthogonal to the plane on which both arms (9,11) are placed as more clearly shown in **Figure 2A****.**

The driving wheel (8) may comprise a second arm (12) also coplanar with the first arm (11) and with the arm (9) of the shaft member (3). The arm (9) of the shaft member (3) is placed in between the first and second arms (11,12) of the driving wheel (8), such that the first and second arms (11,12) alternatively contact with the arm (9) of the shaft member (3) depending on the rotation direction of the driving wheel (8).

The separation distance between the two arms (11,12) of the driving wheel (8) is such that, the arm (9) of the shaft member (3) has freedom of movement in any direction of movement of the driving wheel (8).

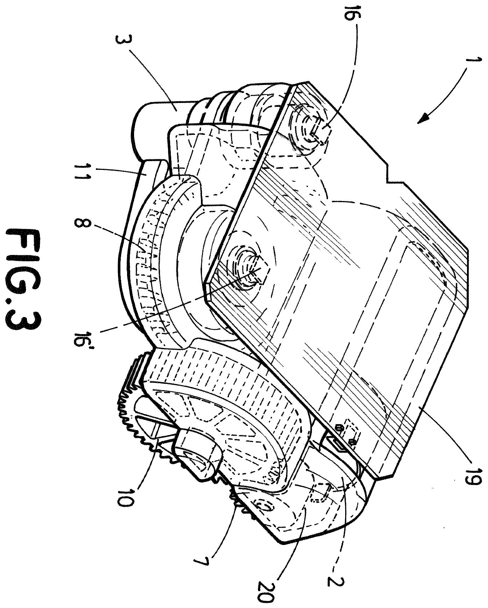

As shown in **Figure 3** the actuator (1) incorporates housing (20) within which the transmission mechanism (4) the electric motor (2) and the driving wheel (8) are, at least partially, enclosed. The actuator (1) also includes a Printed Circuit Board (PCB) (19) mounted with the housing (20).

An electric motor controller might be implemented in the same PCB (19). In other preferred embodiments, the controller is an individual device placed in a location of a vehicle different than the actuator, or it might be implemented with other electronics of a vehicle. The controller is communicated with the electric motor (2) to operate the same, that is to rotate the shaft (6) of the motor in an angular direction. This rotation is transmitted by means of the transmission mechanism (4) to the shaft member (3), to rotate it clockwise or anticlockwise to bring the gearbox shaft member to a stable gearbox position.

According to the present invention, the electronic controller is adapted to reverse the rotation direction of the electric motor shaft (6) for a determined angular displacement, in order to reverse movement of the transmission mechanism (4), in particular to reverse rotation direction of the driving wheel (8), and in this way to uncouple the same from the shaft member (3), thus, the shaft member (3) can rotate freely or certain rotation degrees to reach a stable gear position in both directions.

An additional advantage of uncoupling the shaft member (3) and the transmission mechanism (4), is that in a practical implementation of the invention there is more freedom to use different types of electric motors.

The actuator is configured such that the transmission mechanism (4) reverses movement direction and uncouples from the shaft member (3) in any rotation direction, so as to create a separation gap between the shaft member (3) and the transmission mechanism (4), that allows the shaft member (3) to rotate freely to reach a stable gearbox position.

Biasing means are provided in the actuator such that the driving wheel (8) is rotatable against the action of the biasing means. In this embodiment, the biasing means are embodied as a torsion spring (14) coupled with the driving wheel (8), in a way that the two free ends (15,15') of the torsion spring (14) are attached to the driving wheel (8) as shown in **Figure 1A****,** and to a fixed part of the actuator (1), preferably to the housing (20).

For rotating the driving wheel (8) in any direction, the torque exerted by the electric motor (2) through the transmission mechanism (4), is selected as to overcome the elastic force of the torsion spring (14). In addition, for the torsion spring (14) to move the driving wheel (8), the force of the torsion spring (14) must be greater than the different frictions, existing from the driving wheel (8) to the motor shaft (6).

As shown more clearly in **Figures 2A**2B, each of the first and second arms (11,12) of the driving wheel (8) has a contacting surface (11a,12a) provided for contacting with the shaft arm (9). The contacting surface (11a) of the first arm (11) has a wavy configuration, and the contacting surface (12a) of the second arm (12) is flat.

The wavy configuration of one of those contacting surfaces (9a, 11a, 12a) provides a variable ratio during contact between the arm (9) and the first arm (11) or the second arm (12), to achieve more load in a particular angle stroke range, which is needed for example for the gear disengagement from the Park gear position.

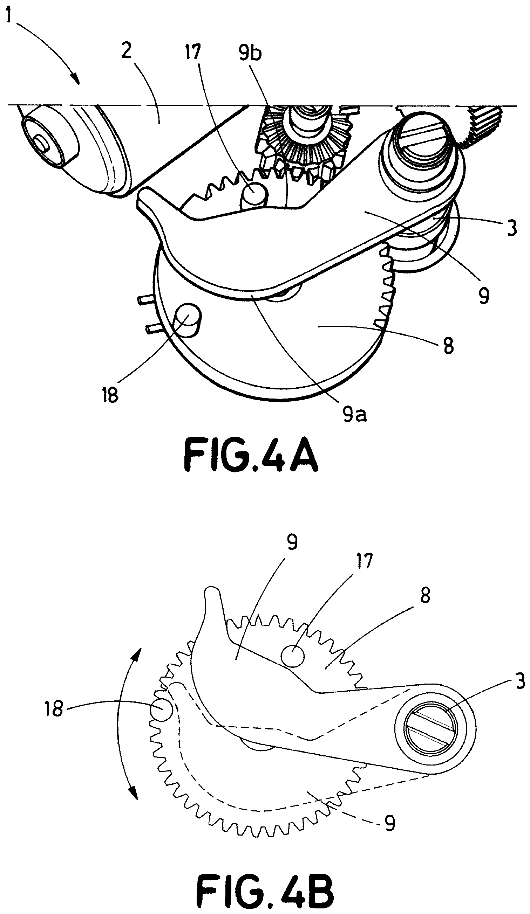

Alternatively, the wavy surface can be provided in a contacting surface (12a) of the second arm (12), or even on a contacting surface (9a) of the arm (9) of the shaft member (3), as is the case of the embodiment of **Figure 4** providing the same effect described above.

As represented in **Figure 3****,** the PCB (19) incorporates a first rotation sensor (16) and preferably a second rotation sensor (16') arranged for sensing rotation of the axis (X,Y) of the shaft member (3) and the driving wheel (8) respectively. These two rotation sensors (16,16') detect the position of the respective axis (X,Y), to optimize the motor working parameters based on the coupling and uncoupling working area.

The signal from one or both sensors, can be used as a redundancy of information to better ensure that the actuator positions the gearbox correctly according to the commands of a driver. The positions of the axis of the gearbox and the position of the axis of the driving wheel is compared, to always have control on the system for the actuator and for the gearbox.

In the alternative embodiment of **Figure 4****,** the driving wheel (8) instead of arms (11,12), has two pegs (17,18) provided for contacting with the arm (9) of the shaft member (3). The arm (9) is placed in between the two pegs (17,18), and has two opposite wavy surfaces (9a,9b) on which the pegs (17,18) may slide.

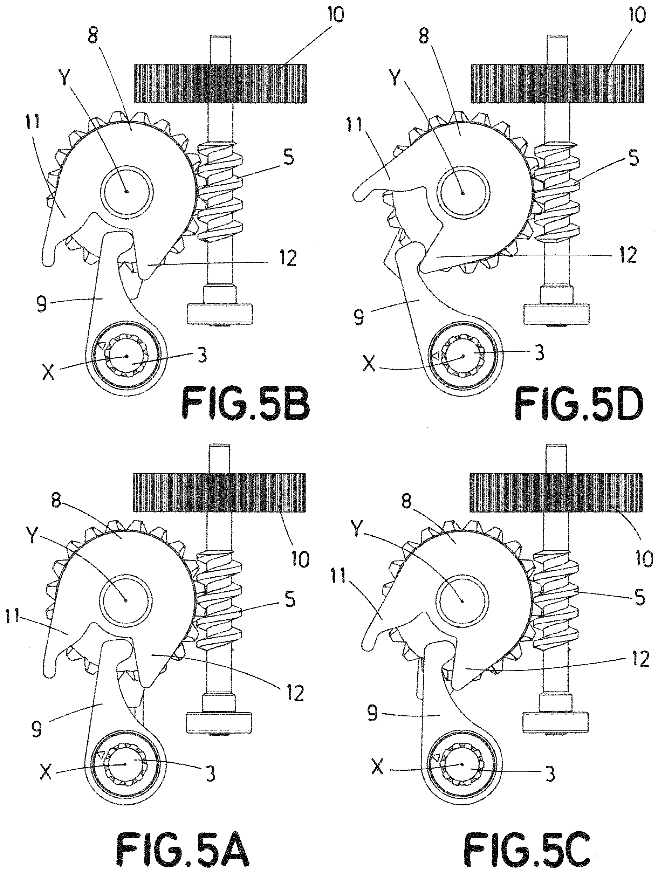

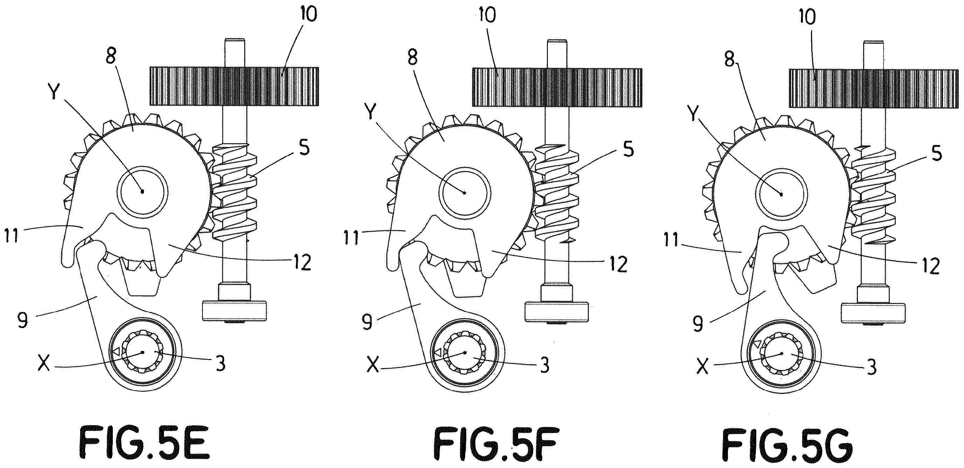

The operation of the transmission mechanism is shown in the sequence of figures of **Figure 5****.** As it can be noted in **in** **Figures 5A** - **5D** as driving wheel (8) rotates clockwise, the arm (12) is contacting (coupled) with the arm (9) to rotate the shaft member (3) anticlockwise (as seen in the figures), as to bring the shaft member (3) close to a gear shift position. At the position shown in **Figure 5E****,** the driving wheel (8) uncouples from the arm (8) so that the shaft member (3) is free to rotate in both directions. In **Figures 5F and 5G****,** as the driving wheel (8) rotates anti-clockwise, the arm (11) of the driving wheel (8) is in contact with the arm (9) to rotate the shaft member (3) clockwise (as seen in the figures).

Other preferred embodiments of the present invention are described in the appended dependent claims.

## Claims

1. A gearbox actuator (1) comprising:
an electric motor (2),
a shaft member (3) rotatable about a gearbox axis (X), and adapted for its mechanical connection with a gearbox shaft of a motor vehicle,
a transmission mechanism (4) coupled with the electric motor (2) and couplable with the shaft member (3) for transmitting a rotation movement from the electric motor (2) to the shaft member (3) to bring the shaft member (3) to selected angular positions for shifting gears, and
wherein the gearbox actuator (1) is configured such that the transmission mechanism (4) can move in a direction in which it is coupled in one rotation direction with the shaft member (3) to rotate the shaft member (3) towards a gearbox position,
**characterized in that**:
the gearbox actuator (1) further comprises an electronic controller electrically connected to the electric motor (2) to operate the same,
wherein the electronic controller is adapted such that the transmission mechanism (4) uncouples from the shaft member (3), so the shaft member (3) can rotate freely to reach a stable gear position, and
wherein the electronic controller is further adapted to reverse rotation direction of the electric motor shaft (6) for a determined angular displacement, in order to reverse movement of the transmission mechanism (4) and uncouple the same from the shaft member (3), so the shaft member (3) can rotate freely to reach a stable gear position in both directions, and
wherein the gearbox actuator (1) is configured such that the transmission mechanism (4) reverses movement direction and uncouples from the shaft member (3) so as to create a separation gap between the shaft member (3) and the transmission mechanism (4), that allows the shaft member (3) to rotate freely to reach a stable gearbox position.

2. A gearbox actuator according to claim 1, wherein the transmission mechanism (4) comprises a driving wheel (8) rotatable by the electric motor (2) and engageable with the shaft member (3) such that rotation of the shaft (6) of the electric motor (2) can be transmitted to the shaft member (3) for shifting gears.

3. A gearbox actuator according to claim 2, wherein the shaft member (3) has an arm (9) radially extending from the gearbox axis (X).

4. A gearbox actuator according to claim 3, wherein the driving wheel (8) has a protrusion engageable with the arm (9) of the shaft member (3) for rotating the same.

5. A gearbox actuator according to claim 2 or 3, wherein the transmission mechanism (4) comprises a worm (5) meshed with the electric motor shaft (6) and with the driving wheel (8), wherein the worm (5) is parallel to the electric motor shaft (6) and the transmission mechanism (4) further comprises a toothed wheel (10) axially attached to the worm (5) and meshed with the electric motor shaft (6).

6. A gearbox actuator according to any of the claims 3 to 4, further comprising biasing means configured for biasing the driving wheel (8), and wherein the driving wheel (8) is rotatable by the electric motor (2) in both directions against the action of the biasing means.

7. A gearbox actuator according to claim 6, wherein the biasing means is a torsion spring (14) coupled with the driving wheel (8), and wherein the two ends (15,15') of the torsion spring (14) are attached to the driving wheel (8) and attached to a fixed part of the actuator.

8. A gearbox actuator according to claim 4, wherein the rotation axis (Y) of the driving wheel (8) is parallel to the gearbox axis (X), and wherein the protrusion of the driving wheel is a first arm (11), and wherein the arm (9) of the shaft member (3) and the first arm (11) of the driving wheel (8) are coplanar.

9. A gearbox actuator according to claim 8, wherein the driving wheel (8) has a second arm (12) also coplanar with the first arm (11) and with the arm (9) of the shaft member (3), and wherein the arm (9) of the shaft member (3) is placed in between the first and second arms (11,12) of the driving wheel (8), such that the first and second arms (11,12) can alternatively contact with the shaft arm (9).

10. A gearbox actuator according to claim 9, wherein the rotation axis (Y) of the driving wheel (8) is orthogonal to the plane on which both arms (11,12) are placed.

11. A gearbox actuator according to claim 9, wherein each of the first and second arms (11,12) of the driving wheel (8) has a contacting surface (11a,12a) provided for contacting with the arm (9) of the shaft member (3), and wherein one of the contacting surfaces is flat and the other contacting surface is wavy.

## Patentansprüche

1. Getriebestellglied (1) umfassend:
einen Elektromotor (2),
ein Wellenglied (3), welches um eine Getriebeachse (X) rotierbar ist und für dessen mechanische Verbindung mit einer Getriebewelle eines Motorfahrzeugs angepasst ist,
einen Übertragungsmechanismus (4), welcher mit dem Elektromotor (2) gekoppelt ist und mit dem Wellenglied (3) koppelbar ist, um eine Rotationsbewegung vom Elektromotor (2) zum Wellenglied (3) zu übertragen, um das Wellenglied (3) zu ausgewählten Winkelpositionen zu bringen, um Gänge zu ändern, und
wobei das Getriebestellglied (1) so ausgebildet ist, dass sich der Übertragungsmechanismus (4) in eine Richtung bewegen kann, in welcher er in einer Rotationsrichtung mit dem Wellenglied (3) gekoppelt ist, um das Wellenglied (3) zu einer Getriebeposition hin zu rotieren,
**dadurch gekennzeichnet, dass**
das Getriebestellglied (1) zusätzlich eine elektronische Steuerung umfasst, welche elektrisch mit dem Elektromotor (2) verbunden ist, um diesen zu betreiben,
wobei die elektronische Steuerung so angepasst ist, dass sich der Übertragungsmechanismus (4) vom Wellenglied (3) entkoppelt, sodass das Wellenglied (3) frei rotieren kann, um eine stabile Gangposition zu erreichen, und
wobei die elektronische Steuerung zusätzlich dazu angepasst ist, die Rotationsrichtung der Elektromotorwelle (6) für eine bestimmte Winkelverschiebung umzukehren, um die Bewegung des Übertragungsmechanismus (4) umzukehren und denselben vom Wellenglied (3) zu entkoppeln, sodass das Wellenglied (3) frei rotieren kann, um eine stabile Gangposition in beiden Richtungen zu erreichen, und
wobei das Getriebestellglied (1) so ausgebildet ist, dass der Übertragungsmechanismus (4) die Bewegungsrichtung umkehrt und sich vom Wellenglied (3) entkoppelt, um einen Trennungsspalt zwischen dem Wellenglied (3) und dem Übertragungsmechanismus (4) zu erstellen, welcher es dem Wellenglied (3) erlaubt frei zu rotieren, um eine stabile Getriebeposition zu erreichen.

2. Getriebestellglied nach Anspruch 1, wobei der Übertragungsmechanismus (4) ein Antriebsrad (8) umfasst, welches vom Elektromotor (2) rotiert werden kann und mit dem Wellenglied (3) eingreifen kann, sodass die Rotation der Welle (6) des Elektromotors (2) auf das Wellenglied (3) übertragen werden kann, um Gänge zu ändern.

3. Getriebestellglied nach Anspruch 2, wobei das Wellenglied (3) einen Arm (9) aufweist, welcher sich radial von der Getriebeachse (X) aus erstreckt.

4. Getriebestellglied nach Anspruch 3, wobei das Antriebsrad (8) einen Vorsprung aufweist, welcher mit dem Arm (9) des Wellenglieds (3) eingreifen kann, um dasselbe zu rotieren.

5. Getriebestellglied nach Anspruch 2 oder 3, wobei der Übertragungsmechanismus (4) ein Gewinde (5) umfasst, welches mit der Elektromotorwelle (6) und mit dem Antriebsrad (8) ineinandergreift, wobei das Gewinde (5) parallel zur Elektromotorwelle (6) ist und der Übertragungsmechanismus (4) zusätzlich ein Zahnrad (10) umfasst, welches axial am Gewinde (5) befestigt ist und mit der Elektromotorwelle (6) ineinandergreift.

6. Getriebestellglied nach einem der Ansprüche 3 bis 4, zusätzlich umfassend Vorspannungsmittel, welche dazu ausgebildet sind, das Antriebsrad (8) vorzuspannen, und wobei das Antriebsrad (8) vom Elektromotor (2) in beide Richtungen gegen die Wirkung der Vorspannungsmittel rotierbar ist.

7. Getriebestellglied nach Anspruch 6, wobei das Vorspannungsmittel eine Torsionsfeder (14) ist, welche mit dem Antriebsrad (8) gekoppelt ist, und wobei beide Enden (15, 15') der Torsionsfeder (14) am Antriebsrad (8) befestigt sind und an einem festen Teil des Stellglieds befestigt sind.

8. Getriebestellglied nach Anspruch 4, wobei die Rotationsachse (Y) des Antriebsrads (8) parallel zur Getriebeachse (X) ist, und wobei der Vorsprung des Antriebsrads ein erster Arm (11) ist, und wobei der Arm (9) des Wellenglieds (3) und der erste Arm (11) des Antriebsrads (8) komplanar sind.

9. Getriebestellglied nach Anspruch 8, wobei das Antriebsrad (8) einen zweiten Arm (12) aufweist, welcher auch komplanar mit dem ersten Arm (11) und mit dem Arm (9) des Wellenglieds (3) ist, und wobei der Arm (9) des Wellenglieds (3) zwischen dem ersten und dem zweiten Arm (11, 12) des Antriebsrads (8) platziert ist, sodass der erste und der zweite Arm (11, 12) alternativ mit dem Wellenarm (9) in Kontakt kommen können.

10. Getriebestellglied nach Anspruch 9, wobei die Rotationsachse (Y) des Antriebsrads (8) orthogonal zur Ebene ist, auf welcher beide Arme (11, 12) platziert sind.

11. Getriebestellglied nach Anspruch 9, wobei jeder des ersten und des zweiten Armes (11, 12) des Antriebsrads (8) eine Kontaktfläche (11a, 12a) aufweist, welche dazu vorgesehen ist, mit dem Arm (9) des Wellenglieds (3) in Kontakt zu kommen, und wobei eine der Kontaktflächen flach ist und die andere Kontaktfläche wellig ist.

## Revendications

1. Actionneur de boîte de vitesses (1) comprenant :
un moteur électrique (2),
un élément d'arbre (3) rotatif autour d'un axe de boîte de vitesses (X), et adapté pour sa connexion mécanique avec un arbre de boîte de vitesses d'un véhicule à moteur,
un mécanisme de transmission (4) couplé avec le moteur électrique (2) et couplable avec l'élément d'arbre (3) pour transmettre un mouvement de rotation depuis le moteur électrique (2) à l'élément d'arbre (3) pour amener l'élément d'arbre (3) à des positions angulaires sélectionnées pour changer les vitesses, et
dans lequel l'actionneur de boîte de vitesses (1) est configuré de sorte que le mécanisme de transmission (4) peut se déplacer dans une direction dans laquelle il est couplé dans une direction de rotation avec l'élément d'arbre (3) pour faire tourner l'élément d'arbre (3) vers une position de boîte de vitesses,
**caractérisé en ce que**
l'actionneur de boîte de vitesses (1) comprend en outre un contrôleur électronique électriquement connecté au moteur électrique (2) pour faire fonctionner celui-ci,
dans lequel le contrôleur électronique est adapté de sorte que le mécanisme de transmission (4) se désaccouple de l'élément d'arbre (3), de sorte que l'élément d'arbre (3) peut tourner librement pour atteindre une position de vitesse stable, et
dans lequel le contrôleur électronique est en outre adapté pour inverser la direction de rotation de l'arbre de moteur électrique (6) pour un déplacement angulaire déterminé, afin d'inverser le mouvement du mécanisme de transmission (4) et de désaccoupler celui-ci à partir de l'élément d'arbre (3), de sorte que l'élément d'arbre (3) peut tourner librement pour atteindre une position de vitesse stable dans les deux directions, et
dans lequel l'actionneur de boîte de vitesses (1) est configuré de sorte que le mécanisme de transmission (4) inverse la direction de mouvement et se désaccouple de l'élément d'arbre (3) afin de créer un vide de séparation entre l'élément d'arbre (3) et le mécanisme de transmission (4), qui permet à l'élément d'arbre (3) de tourner librement pour atteindre une position de boîte de vitesses stable.

2. Actionneur de boîte de vitesses selon la revendication 1, dans lequel le mécanisme de transmission (4) comprend une roue motrice (8) rotative par le moteur électrique (2) et pouvant entrer en prise avec l'élément d'arbre (3) de sorte que la rotation de l'arbre (6) du moteur électrique (2) peut être transmise à l'élément d'arbre (3) pour changer les vitesses.

3. Actionneur de boîte de vitesses selon la revendication 2, dans lequel l'élément d'arbre (3) a un bras (9) s'étendant radialement depuis l'axe de la boîte de vitesses (X).

4. Actionneur de boîte de vitesses selon la revendication 3, dans lequel la roue motrice (8) a une protubérance pouvant entrer en prise avec le bras (9) de l'élément d'arbre (3) pour faire tourner celui-ci.

5. Actionneur de boîte de vitesses selon la revendication 2 ou 3, dans lequel le mécanisme de transmission (4) comprend une vis sans fin (5) engrenée avec l'arbre de moteur électrique (6) et avec la roue motrice (8), dans lequel la vis sans fin (5) est parallèle à l'arbre de moteur électrique (6) et le mécanisme de transmission (4) comprend en outre une roue dentée (10) fixée axialement à la vis sans fin (5) et engrenée avec l'arbre de moteur électrique (6).

6. Actionneur de boîte de vitesses selon l'une quelconque des revendications 3 à 4, comprenant en outre des moyens de sollicitation pour solliciter la roue motrice (8), et dans lequel la roue motrice (8) est rotative par le moteur électrique (2) dans les deux directions contre l'action des moyens de sollicitation.

7. Actionneur de boîte de vitesses selon la revendication 6, dans lequel les moyens de sollicitation sont un ressort de torsion (14) couplé avec la roue motrice (8), et dans lequel les deux extrémités (15, 15') du ressort de torsion (14) sont fixées à la roue motrice (8) et fixées à une partie fixe de l'actionneur.

8. Actionneur de boîte de vitesses selon la revendication 4, dans lequel l'axe de rotation (Y) de la roue motrice (8) est parallèle à l'axe de la boîte de vitesses (X), et dans lequel la protubérance de la roue motrice est un premier bras (11), et dans lequel le bras (9) de l'élément d'arbre (3) et le premier bras (11) de la roue motrice (8) sont coplanaires.

9. Actionneur de boîte de vitesses selon la revendication 8, dans lequel la roue motrice (8) a un deuxième bras (12) également coplanaire avec le premier bras (11) et avec le bras (9) de l'élément d'arbre (3), et dans lequel le bras (9) de l'élément d'arbre (3) est placé entre le premier et le deuxième bras (11, 12) de la roue motrice (8), de sorte que le premier et le deuxième bras (11, 12) peuvent alternativement entrer en contact avec le bras d'arbre (9).

10. Actionneur de boîte de vitesses selon la revendication 9, dans lequel l'axe de rotation (Y) de la roue motrice (8) est orthogonal au plan sur lequel les deux bras (11, 12) sont placés.

11. Actionneur de boîte de vitesses selon la revendication 9, dans lequel chacun des premier et deuxième bras (11, 12) de la roue motrice (8) a une surface de contact (11a, 12a) prévue pour entrer en contact avec le bras (9) de l'élément d'arbre (3), et dans lequel une des surfaces de contact est plate et l'autre surface de contact est ondulée.
